Europäisches Patentamt

European Patent Office

Office européen des brevets

(19)

(11) Veröffentlichungsnummer : **0 285 920 B1**

(12) # EUROPÄISCHE PATENTSCHRIFT

(45) Veröffentlichungstag der Patentschrift :
**10.04.91 Patentblatt 91/15**

(51) Int. Cl.$^5$ : **G21C 3/322, G21C 15/00**

(21) Anmeldenummer : **88104783.1**

(22) Anmeldetag : **24.03.88**

(54) Kernreaktorbrennelement.

(30) Priorität : **06.04.87 DE 3711536**

(43) Veröffentlichungstag der Anmeldung :
**12.10.88 Patentblatt 88/41**

(45) Bekanntmachung des Hinweises auf die
Patenterteilung :
**10.04.91 Patentblatt 91/15**

(84) Benannte Vertragsstaaten :
**DE ES IT SE**

(56) Entgegenhaltungen :
**EP-A- 0 200 111**
**EP-A- 0 204 288**
**DE-A- 3 533 317**
**US-A- 4 675 154**

(73) Patentinhaber : **Siemens Aktiengesellschaft**
**Wittelsbacherplatz 2**
**W-8000 München 2 (DE)**

(72) Erfinder : **Lettau, Hans**
**Lettenfeld 1**
**W-8521 Effeltrich (DE)**
Erfinder : **Preusche, Gerhard, Dr.**
**Schumannstrasse 19**
**W-8522 Herzogenaurach (DE)**
Erfinder : **Lill, Günther, Dr.**
**Händelstrasse 10**
**W-8522 Herzogenaurach (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Kernreaktorbrennelement nach dem Oberbegriff des Patentanspruches 1.

Ein derartiges Kernreaktorbrennelement ist aus der US-A 38 08 098 bekannt. Dieses bekannte Kernreaktorbrennelement ist für einen Siedewasserkernreaktor bestimmt. Sein Wasserrohr ist ein Hohlzylinder und dezentral im Kernreaktorbrennelement angeordnet. Es bildet einen Innenkanal, durch den im Siedewasserkernreaktor Flüssigwasser hindurchströmt, das über die gesamte Länge des Kernreaktorbrennelementes nicht siedet. Dadurch bewirkt das Flüssigwasser im Wasserrohr eine verbesserte Verteilung von Moderator und Kernbrennstoff und damit eine verbesserte Verteilung des Flusses der thermischen Neutronen und in der Folge eine erhöhte Reaktivität im Reaktorkern des Siedewasserkernreaktors. Dies führt zu einer verbesserten Nutzung des eingesetzten Kernbrennstoffes.

Das Wasserrohr ist in der Regel ein verhältnismäßig dünnwandiges Rohr aus einer Zirkoniumlegierung und kann an beiden Enden offen oder an mindestens einem Ende verschlossen sein und dort Bohrungen aufweisen, die einen Flüssigwasserdurchsatz durch das Wasserrohr aufrechterhalten. Einerseits muß der Flüssigwasserdurchsatz durch das Wasserrohr im Siedewasserkernreaktor so groß sein, daß das Flüssigwasser im Wasserrohr gerade nicht siedet, andererseits soll aber durch das Wasserrohr nicht mehr Flüssigwasser als nötig der Kühlung der Brennstäbe des Kernreaktorbrennelementes entzogen werden.

Während also im Wasserrohr der Flüssigwasserdruck vom Wassereintritts-, in der Regel vom Unterende, bis zum Wasseraustritts-, in der Regel bis zum Oberende, nahezu den gleichen Wert hat, ergibt sich auf der Außenseite des Wasserrohres infolge von Reibung an Brennstäben des Kernreaktorbrennelementes und Stoßverlusten z.B. an gitterförmigen Abstandhaltern für die Brennstäbe des Kernreaktorbrennelementes ein Druckabfall im Kühlmittel des Siedewasserkernreaktors vom Wassereintrittsende zum Wasseraustrittsende des Wasserrohres. Hieraus resultiert eine Differenz der Drucke auf der Innen- und auf der Außenseite des Wasserrohres, die eine erhebliche Wanddicke des Wasserrohres erforderlich macht.

Der Erfindung liegt die Aufgabe zugrunde, hier Abhilfe zu schaffen und eine geringe Wanddicke des Wasserrohres zu ermöglichen.

Zur Lösung dieser Aufgabe hat ein Kernreaktorbrennelement der eingangs erwähnten Art erfindungsgemäß die Merkmale des kennzeichnenden Teiles des Patentanspruches 1.

Mit der die Durchtrittsöffnung für das Flüssigwasser bildenden Blende kann ein stufenweiser Druckabfall im Wasserrohr – ausgehend von dessen Wassereintrittsöffnung – erzielt, und der Druckverlauf innerhalb des Wasserrohres den Druckverlauf auf der Außenseite des Wasserrohres angenähert werden. Dementsprechend kann auch die Wanddicke des Wasserrohres verhältnismäßig gering gewählt werden, so daß für das Wasserrohr nur wenig Werkstoff erforderlich ist und dieses Wasserrohr dementsprechend weniger thermische Neutronen absorbiert, aber auch mehr Volumen für aus dem Flüssigwasser bestehende Moderatorsubstanz bietet.

Die Unteransprüche sind auf vorteilhafte Ausbildungen der Erfindung gerichtet.

Die Erfindung und ihre Vorteile seien anhand der Zeichnung an Ausführungsbeispielen näher erläutert:

FIG 1 zeigt in perspektivischer Ansicht und teilweise in Explosionsdarstellung das Skelett eines erfindungsgemäßen Kernreaktorbrennelementes.

FIG 2 zeigt in perspektivischer Ansicht das Wasserrohr des Kernreaktorbrennelementes nach FIG 1.

FIG 3 zeigt einen Längsschnitt durch das Wasserrohr nach FIG 2.

FIG 4 zeigt ein Diagramm zur Druckverteilung am Wasserrohr nach FIG 2 in einem Siedewasserkernreaktor.

Die Figuren 5 bis 11 zeigen vorteilhafte Blenden in Wasserrohren erfindungsgemäßer Kernreaktorbrennelemente.

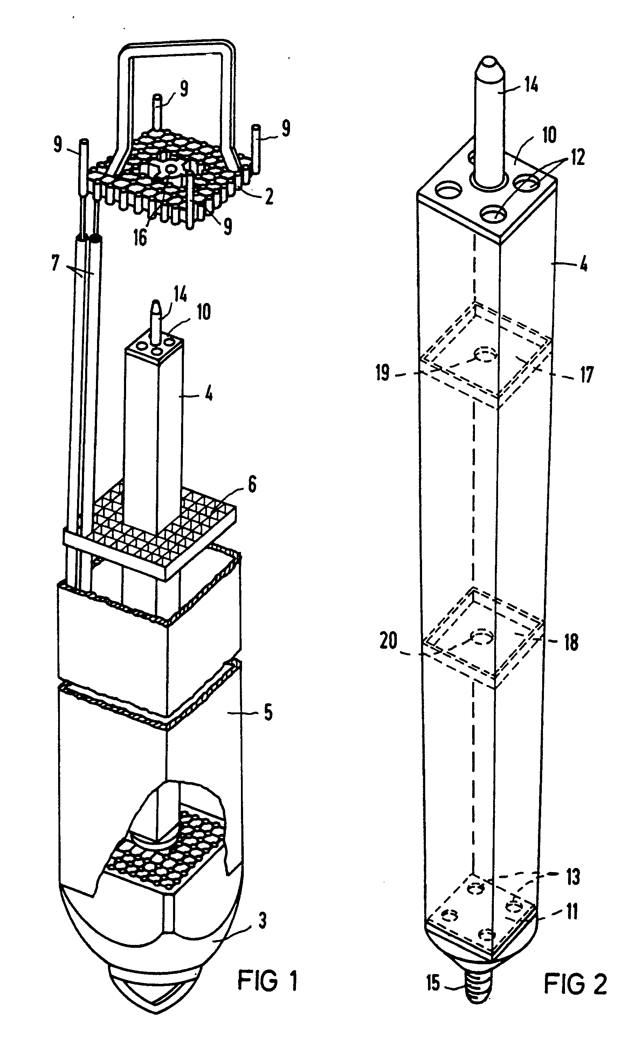

Das Kernreaktorbrennelement nach FIG 1 weist einen Brennelementkopf 2 und einen Brennelementfuß 3 jeweils mit quadratischem Querschnitt, ein langgestrecktes Wasserrohr 4 mit quadratischem Querschnitt und einen langgestreckten Brennelementkasten 5 ebenfalls mit quadratischem Querschnitt auf. Das Wasserrohr 4 ist mittig in gitterförmigen Abstandhaltern 6 angeordnet, die sich innerhalb des Brennelementkastens 5 befinden und – in Längsrichtung des Wasserrohres 4 gesehen – Abstand voneinander haben. Durch jede Masche dieser Abstandshalter 6 greift ein Kernbrennstoff enthaltender Brennstab 7. Beispielsweise sind acht dieser Brennstäbe 7 sogenannte Tragestäbe, die an beiden Enden Gewindebolzen haben, mit denen sie am Brennelementkopf 2 mit einer nicht dargestellten Mutter und am Brennelementfuß 3 direkt festgeschraubt sind. Die anderen Brennstäbe 7 greifen lose mit an ihren beiden Enden befindlichen Bolzen in Durchführungen im Brennelementkopf 2 und Brennelementfuß 3. Alle Brennstäbe 7 sind jeweils mit einer auf Druck vorgespannten, nicht dargestellten Schraubenfeder fixiert, die auf den Gewindebolzen bzw. Bolzen auf der Innenseite des Brennelementkopfes 2 sitzen und sich an dieser Innenseite und am betreffenden Brennelementstab 7 abstützen.

Während Brennelementkopf 2 und Brennelementfuß 3 aus rostfreiem Stahl bestehen, ist der langgestreckte Brennelementkasten 5 aus einer Zirkoniumlegierung gefertigt. Er ist an beiden Enden offen und umfaßt den Brennelementkopf 2 und den Brennelementfuß 3. Am Oberende weist er innen an den Ecken nicht dargestellte Blechstreifen auf, die am Oberende von Stehbolzen 9 an der Oberseite des Brennelementkopfes 2 festgeschraubt sind.

Das Wasserrohr 4 besteht ebenfalls aus einer Zirkoniumlegierung. Seine Querschnittsseiten sind parallel zur jeweils benachbarten Querschnittsseite des Brennelementkastens 5. Die Stege der Abstandhalter 6 durchsetzen sich rechtwinklig und sind ebenfalls zu jeweils zwei zueinander parallelen Querschnittsseiten des Wasserrohres 4 parallel. Alle Querschnittsseiten des Wasserrohres 4 haben von der jeweils benachbarten Querschnittsseite des Brennelementkastens 5 gleichen Abstand.

Wie FIG 1 und 2 zeigen, ist das Wasserrohr 4 an jedem Ende mit einer plattenartigen Endblende 10 und 11 verschlossen. Diese Endblenden 10 und 11 bestehen ebenfalls aus einer Zirkoniumlegierung und sind an dem Wasserrohr 4 festgeschweißt. Jede Endblende 10 und 11 hat vier Durchtrittsöffnungen 12 bzw. 13 für Flüssigwasser. Während die Endblende 10 am Oberende des Wasserrohres 4 außen mit einem zur Längsrichtung des Wasserrohres 4 parallelen Bolzen 14 versehen ist, weist die Endblende 11 am Unterende des Wasserrohres 4 außen einen Gewindebolzen 15 auf, der ebenfalls zur Längsrichtung des Wasserrohres 4 parallel ist. Der Bolzen 14 greift an der Innenseite des Brennelementkopfes 2 lose durch eine Durchführung 16 eines gitterförmigen Rostes dieses Brennelementkopfes 2, während der Gewindebolzen 15 ebenfalls auf der Innenseite des Brennelementfußes 3 durch eine Durchführung eines gitterförmigen Rostes des Brennelementfußes 3 greift und mit einer nichtdargestellten Mutter an diesem Brennelementfuß 3 festgeschraubt ist.

Wie aus FIG 2 erkennbar ist, befinden sich innerhalb des Wasserrohres 4 zwei plattenartige, querstehende Blenden 17 und 18 aus Blech aus Zirkoniumlegierung, die voneinander und von beiden Enden des Wasserrohres 4 Abstand haben. Beide plattenartigen, querstehenden Blenden 17 und 18 bilden jeweils eine Druchtrittsöffnung 19 und 20 für Flüssigwasser, die sich in der Mitte der jeweiligen Blende befindet.

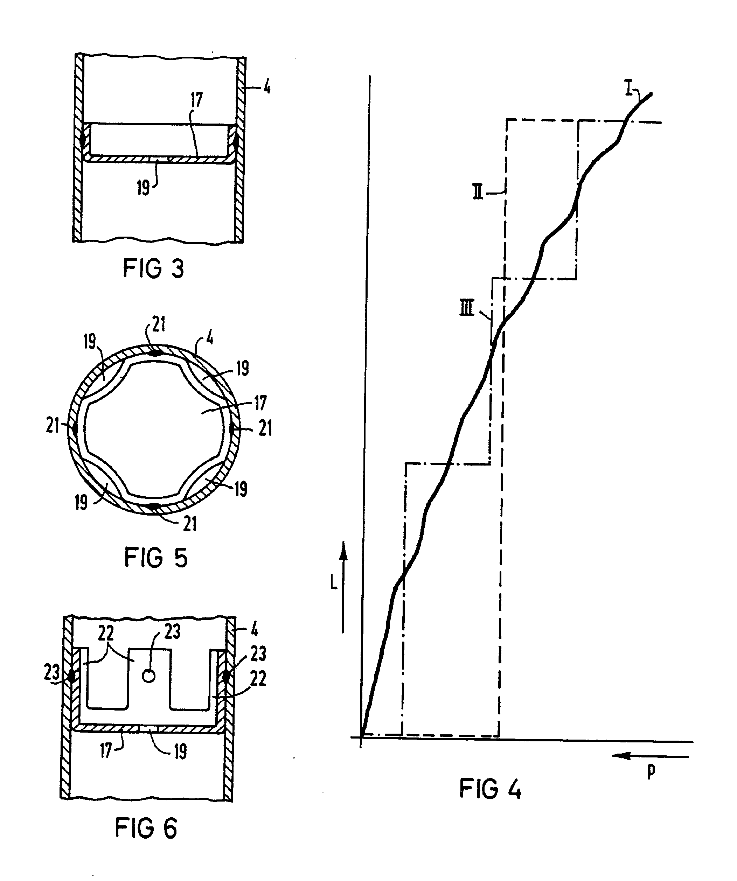

Wie FIG 3 für die Blende 17 zeigt, haben die Blenden 17 und 18 einen in Richtung zum Oberende des Wasserrohres 4 hochgezogenen Rand, an dem sie mit der Innenseite des Wasserrohres 4 beispielsweise durch Punktschweißen verschweißt sind.

In einem Siedewasserkernreaktor ist das Kernreaktorbrennelement nach FIG 1 vertikal angeordnet und wird im Brennelementkasten 5 von aus $H_2O$ bestehendem Kühlmittel durchströmt, das durch den gitterförmigen Rost des Brennelementfußes 3 hindurch in den Brennelementkasten 5 ein – und durch den gitterförmigen Rost des Brennelementkopfes 2 hindurch aus dem Brennelementkasten 5 austritt. Während sich innerhalb des Wasserrohres 4 ausschließlich Flüssigwasser befindet, befindet sich auf der Außenseite des Wasserrohres 4 im Brennelementkasten 5 nur am Unterende des Kernreaktorbrennelementes mit dem Brennelementfuß 3 Flüssigwasser und am Oberende mit dem Brennelementkopf 2 Naßdampf.

Im Diagramm nach FIG 4 ist in der Abszisse der Druck p und in der Ordinate die Länge L des Wasserrohres 4 nach FIG 1 und 2 ausgehend vom Unterende aufgetragen.

Die durchgezogene Kurve I in FIG 4 stellt den Kühlmitteldruck auf der Außenseite des Wasserrohres 4 innerhalb des Brennelementkastens 5 des Kernreaktorbrennelementes nach FIG 1 dar. Durch die gestrichelte Stufenlinie II ist der Druck des Flüssigwassers innerhalb des Wasserrohres 4 für den Fall symbolisiert, daß dieses Wasserrohr 4 keine Blenden 17 und 18, sondern nur gleich ausgebildete Endblenden 10 und 11 aufweist.

Die strichpunktierte Stufenlinie III in FIG 4 zeigt die Druckverteilung des Flüssigwassers im Wasserrohr 4 nach FIG 2 mit den beiden Endblenden 10 und 11 und den beiden Blenden 17 und 18 mit Abstand voneinander und von beiden Enden des Wasserrohres 4. Die strichpunktierte Stufenlinie III nähert sich der durchgezogenen Kurve I umso genauer an, je mehr Blenden mit Durchtrittsöffnungen für das Flüssigwasser innerhalb des Wasserrohres 4 angeordnet sind. Dies bedeutet, daß die Druckverteilung innerhalb des Wasserrohres 4 umso besser der Druckverteilung außerhalb des Wasserrohres 4 angepaßt ist, je mehr Blenden mit Durchtrittsöffnungen für das Flüssigwasser sich im Wasserrohr 4 befinden. Dementsprechend klein kann auch die Wanddicke des Wasserrohres 4 gewählt werden.

Wie FIG 5 erkennen läßt, kann der Querschnitt eines Wasserrohres 4 in einem erfindungsgemäßen Kernreaktorbrennelement auch kreisrund sein. Eine aus einem Blech bestehende Blende 17 kann wie in FIG 3 einen hochgezogenen Rand aufweisen, der an zwei Stellen 21 mit der Innenseite des Wasserrohres 4 verschweißt ist, an vier anderen Stellen aber Abstand von der Innenseite des Wasserrohres 4 hat und dort jeweils eine Durchtrittsöffnung 19 für Flüssigwasser bildet.

Nach dem Längsschnitt entsprechend FIG 6 kann ein Wasserrohr 4 mit kreisrundem Querschnitt eine Blende 17 aus Blech mit zentraler Durchtrittsöffnung 19 enthalten. Diese Blende 17 hat ebenfalls einen hochgezogenen Rand mit Zungen 22, die an Stellen 23 mit der Innenseite des Wasserrohres 4 verschweißt sind.

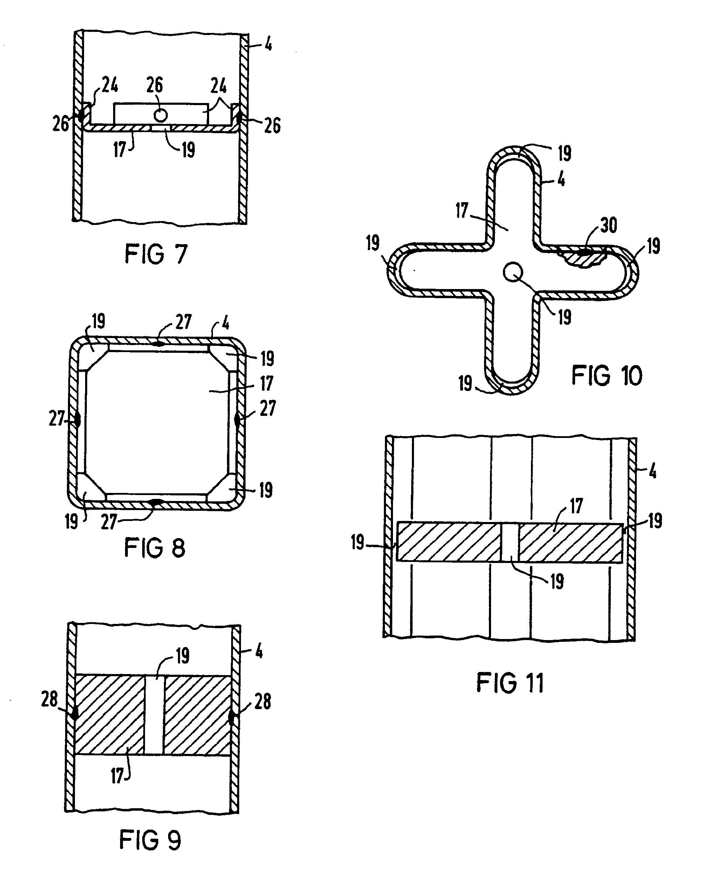

Der Längsschnitt nach FIG 7 zeigt eine quadratische Blende 17 aus Blech in einem Wasserrohr 4 mit quadratischem Querschnitt. Die Blende 17 hat ebenfalls eine zentrale Durchtrittsöffnung 19 für Flüssigwasser und weist hochgezogene Zungen 24 auf, die mit punktförmigen Schweißstellen 26 an der Innenseite des Wasserrohres 4 befestigt sind.

FIG 8 zeigt den quadratischen Querschnitt eines Wasserrohres 4 und eine Blende 17 aus Blech mit am Rand hochgezogenen und an der Innenseite des Wasserrohres 4 festgeschweißten Zungen 27. Diese Blende 17 bildet in den vier Ecken des Querschnitts des Wasserrohres 4 je eine Durchtrittsöffnung 19 für Flüssigwasser zwischen der Innenseite des Wasserrohres 4 und der Kante der Blende 17.

In FIG 9 ist im Längsschnitt ein Wasserrohr 4 mit kreisrundem Querschnitt und einer ebenfalls kreisrunden, aber massiven Blende 17 aus Zirkonium dargestellt, die innerhalb des Wasserrohres 4 an ihrer Mantelfläche an Stellen 28 mit der Innenseite des Wasserrohres 4 verschweißt ist und die eine zentrale, zum Wasserrohr 4 koaxiale Bohrung als Durchtrittsöffnung 19 für Flüssigwasser aufweist.

FIG 10 und 11 zeigen schließlich quer- und längsgeschnitten ein Wasserrohr 4 mit kreuzförmigem Querschnitt. In diesem Wasserrohr 4 ist eine Blende 17 aus kreuzförmig geschnittenem Blech an Stellen 30 an der Innenseite des Wasserrohres 4 festgeschweißt. Diese kreuzförmige Blende 17 kann eine zentrale Durchtrittsöffnung 19 für Flüssigwasser aufweisen. Solche Durchtrittsöffnungen 19 können aber auch zwischen der Innenseite des Wasserrohres 4 und der Blende 17 an deren Enden gebildet sein.

## Ansprüche

1. Kernreaktorbrennelement mit einem langgestreckten Brennelementkasten und Kernbrennstoff enthaltenden Brennstäben, die im Brennelementkasten mit Abstand voneinander und parallel zur Längsrichtung des Kastens angeordnet sind, sowie mit einem zu den Brennstäben parallelen Wasserrohr innerhalb des Brennelementkastens, das an einem Unterende eine Eintritts- und an einem Oberende eine Austrittsöffnung für Flüssigwasser hat, **dadurch gekennzeichnet,** daß innerhalb des Wasserrohres (4) eine Blende (17, 18) mit Abstand von beiden Enden des Wasserrohres (4) angebracht ist, die eine Durchtrittsöffnung (19, 20) für das Flüssigwasser bildet.

2. Kernreaktorbrennelement nach Anspruch 1, **dadurch gekennzeichnet,** daß mindestens an einem Ende des Wasserrohres (4) eine die Austrittsöffnung (12 bzw. 13) für das Flüssigwasser bildende Endblende (10 bzw. 11) angebracht ist.

3. Kernreaktorbrennelement nach Anspruch 1, **dadurch gekennzeichnet,** daß die Blende (17, 18) eine am Wasserrohr (4) befestigtes Blech ist und daß sich die Durchtrittsöffnung (19, 20) in dem Blech oder zwischen dem Blech und dem Wasserrohr (4) befindet.

## Claims

1. Nuclear reactor fuel element having an elongated fuel element box and fuel rods containing nuclear fuel, which fuel rods are arranged in the fuel element box so that they are spaced apart and parallel to the longitudinal direction of the box, and having a water tube parallel to the fuel rods and inside the fuel element box, which fuel element box has an inlet aperture at a lower end and an outlet aperture at an upper end, for water, **characterised in that** a shield (17, 18) is attached inside the water tube (4) at a distance from the two ends of the water tube (4), which shield (17, 18) forms an aperture (19, 20) for the water to pass through.

2. Nuclear reactor fuel element according to claim 1, **characterised in that** an end shield (10 or 11) forming the outlet aperture (12 or 13) for the water is attached to at least one end of the water tube (4).

3. Nuclear reactor fuel element according to claim 1, **characterised in that** the shield (17, 18) is a metal sheet attached to the water tube (4), and in that the through aperture (19, 20) is located in the metal sheet or between the metal sheet and the water tube (4).

## Revendications

1. Assemblage combustible de réacteur nucléaire, comprenant un boîtier-canal et des crayons combustibles qui contiennent de la matière combustible nucléaire et qui sont disposés à distance les uns des autres dans le boîtier-canal et parallèlement à la direction longitudinale du boîtier-canal, ainsi que, à l'intérieur du boîtier-canal, un crayon à eau qui est parallèle au crayon combustible et qui présente, à l'extrémité inférieure, un orifice d'entrée et, à l'extrémité supérieure, un orifice de sortie de l'eau liquide, caractérisé, en ce que, dans le crayon combustible (4), est monté à distance des deux extrémités du crayon combustible (4), un obturateur (17, 18) qui est à distance des deux extrémités du crayon à eau (4) et qui forme un orifice de passage (19, 20) pour l'eau liquide.

2. Assemblage combustible de réacteur nucléaire suivant la revendication 1, caractérisé, en ce qu'au moins à l'une des extrémités du crayon à eau (4) est prévu un obturateur d'extrémité (10 et 11) formant un orifice de sortie (12 et 13) de l'eau liquide.

3. Assemblage combustible de réacteur nucléaire suivant la revendication 1, caractérisé, en ce que l'obturateur (17 et 18) est une tôle fixée au crayon à eau (4) et en ce que l'orifice de passage (19, 20) se trouve dans la tôle ou entre la tôle et le crayon à eau (4).

FIG 1

FIG 2

5

FIG 3

FIG 5

FIG 6

FIG 4

FIG 7

FIG 8

FIG 9

FIG 10

FIG 11